# DEMANDE DE BREVET EUROPEEN

(11) **EP 4 809 800 A1**
(43) Date de publication de la demande: **23.09.2026**
(21) Numéro de dépôt: 26166278.7
(22) Date de dépôt: 20.03.2026
(51) Int. Cl.: A01C 7/10, A01C 15/00

(54) **MODULE DE MESURE D'UN FLUX DE PARTICULES ISSU D'UNE MACHINE AGRICOLE COMPRENANT DES MOYENS DE TRANSFERT DES PARTICULES ENTRE DES MOYENS DE COLLECTE ET DES MOYENS DE MESURE**

(30) Priorité: 20.03.2025 FR 2502845; 20.03.2025 FR 2502846
(71) Demandeur: Burel Production, 35220 Chateaubourg (FR); Kuhn SAS, 67700 Saverne (FR); INSTITUT NATIONAL DE RECHERCHE POUR L'AGRICULTURE, L'ALIMENTATION ET L'ENVIRONNEMENT, 75007 Paris (FR)
(72) Inventeur: LEVEILLE, Lionel, 35500 VITRE (FR); HAYOT, Mathieu, 35130 LA GUERCHE DE BRETAGNE (FR); PIRON, Emmanuel, 03300 CREUZIER LE VIEUX (FR); MICLET, Denis, 03150 VARENNES SUR ALLIER (FR); POTIER, Philippe, 67290 ZITTERSHEIM (FR)
(74) Mandataire: Vidon Brevets & Stratégie

(57) **Abrégé**

L'invention concerne un module de mesure (1) d'un flux de particules pour un banc de test mettant en œuvre au moins deux modules de mesure (1), ledit module de mesure (1) étant destiné à être positionné en regard d'au moins un organe de sortie (ES) d'une machine agricole de distribution de particules pour recevoir l'ensemble des particules délivrées par ledit au moins un organe de sortie (ES), ledit module de mesure (1) comprenant des moyens de collecte (11) de particules en provenance dudit au moins un organe de sortie (ES) de la machine agricole et des moyens de mesure (12) d'une quantité de particules en provenance des moyens de collecte (11), ledit module de mesure (1) comprenant en outre des moyens de transfert (13) des particules reliant les moyens de collecte (11) auxdits moyens de mesure (12), lesdits moyens de transfert (13) étant configurés pour réceptionner les particules s'écoulant de façon turbulente des moyens de collecte (11) et les délivrer selon un écoulement contrôlé et cadencé dans les moyens de mesure (12).

## Description

### Domaine technique

La présente invention se rapporte au domaine technique général du machinisme agricole.

Plus précisément, l'invention concerne le contrôle du dosage et de la distribution de particules dans un contexte d'agriculture de précision. Elle concerne également le contrôle du dosage et de la distribution de poudres et de liquides.

L'invention s'applique ainsi notamment, mais non exclusivement, aux semoirs destinés à être montés ou traînés à l'arrière d'un tracteur, permettant de délivrer des particules, sur une pluralité de rangs d'une parcelle, par exemple d'une exploitation agricole. L'invention s'applique également aux épandeurs d'engrais pneumatiques.

### Art antérieur

On entend ici par « particules » des matériaux en grains, tels que des graines de semence ou des particules d'engrais ou de protection des semis (anti-limaces par exemple) ou des graines de produits phytosanitaires.

Par la suite, on considère plus précisément le cas de la distribution de graines de semence par un semoir. Il est clair cependant que l'approche de l'invention peut être généralisée à d'autres types de particules, et notamment à l'épandage d'engrais solides par le biais d'épandeurs non centrifuge, tel un épandeur d'engrais pneumatique.

Un semoir comprend généralement une ou plusieurs trémies de stockage de particules alimentant une pluralité d'organes de sortie, appelés éléments semeurs répartis de manière régulière sur le châssis du semoir transversalement à l'axe d'avancement du semoir lorsqu'il est attelé à un tracteur. Les particules issues de la trémie s'écoulent généralement à travers des lignes de distribution vers chaque élément semeur dans un flux sensiblement continu. Chaque élément semeur définit un rang de semis ou rang d'ensemencement lequel est sensiblement confondu avec le plan vertical médian de l'élément semeur correspondant et la distance entre deux rangs de semis voisins définit l'écartement. Ainsi, le semoir permet de délivrer des particules sur une pluralité de rangs.

Dans le cadre de l'agriculture de précision, il est souhaitable que la distribution des graines pendant les semis, c'est-à-dire la quantité désirée de produit par unité de surface, soit la plus régulière et la plus précise possible. Il est donc important que les semoirs utilisés par les exploitants évitent au maximum les irrégularités telles que les manques et doubles ainsi que les différences entre rangs. A titre d'exemple, la densité conseillée pour semer du maïs est comprise entre 7 et 12 graines au m2, celle pour semer du blé est comprise entre 200 et 500 grains au m2.

Il est ainsi nécessaire de tester les semoirs lors des phases de recherche et développement ou en sortie de production, et notamment de vérifier que le débit préconisé du semoir, et donc le débit de chaque élément semeur, est respecté. Le fabricant peut être amené à contrôler les performances de fonctionnement, et en particulier sa performance de répartition sur chacun des rangs (on parle de répartition longitudinale) et entre les rangs eux-mêmes (on parle de répartition transversale), par exemple en lien avec des normes environnementales, et éventuellement établir un certificat de conformité de production. Les normes ISO 7256 ou EN13739 par exemple définissent des points de contrôle de performances de travail des semoirs et des épandeurs.

On met ainsi en œuvre pendant les phases de recherche et développement, de production ou en phase de vie chez l'utilisateur, une procédure d'étalonnage au cours de laquelle, pour un réglage approprié des organes de dosage, les semences distribuées par tout ou partie des éléments semeurs sont collectées dans un sac ou un récipient solidarisé à l'élément semeur correspondant. Le sac ou récipient est déplacé et son contenu est pesé ou compté manuellement pour déterminer la quantité de graines distribuée, et le semoir est ajusté en fonction de la quantité distribuée. La procédure est répétée jusqu'à ce que la quantité distribuée corresponde à la valeur désirée. La nécessité de peser le contenu de chaque sac et de répéter la procédure d'étalonnage plusieurs fois est chronophage.

Il est connu du document EP 1 610 112 un banc d'essai pour la mesure de la répartition d'épandage de distributeurs de particules à épandre, du type présentant une distribution centrifuge des particules par un disque.

Les données de pesée ainsi que les valeurs angulaires sont enregistrées en continu au cours du test, et une fois le test terminé, les données brutes de la répartition au sol peuvent être traitées de façon spatiale afin d'établir la nappe de répartition au sol.

Une autre solution connue du document EP 3 135 090 consiste à implanter un capteur de comptage des graines le long de la descente de graines dans les éléments semeurs. Un inconvénient de cette solution est que ces capteurs interfèrent avec la performance des éléments semeurs que l'on cherche à mesurer. De surcroit, il apparaît un phénomène de saturation du capteur optique entrainant un pourcentage d'erreur de la mesure. Ce pourcentage d'erreur est égal à approximativement 2% pour du blé, 98% des grains de blé passant devant le capteur étant comptés pour une quantité de 250 grains par seconde passant devant le capteur.

Il est par ailleurs connu du document EP 3 908 097 une machine d'épandage incorporant une unité d'étalonnage/calibrage comprenant une structure d'entrée d'un produit à épandre depuis une trémie de stockage du produit vers une roue de dosage, un dispositif de commande/régulation relié à la roue de dosage, et un dispositif de pesée placé en aval de la roue de dosage qui peut être basculé pour assurer sa vidange. Cette unité d'étalonnage/calibrage permet de régler le débit massique réel de produit à épandre mais ne permet pas une mesure de débit à la sortie de chaque organe de sortie de la machine.

Il est également souhaitable de tester les semoirs sur le terrain, le débit réel du flux de produit essentiellement continu estimés pouvant différer considérablement du débit souhaité après plusieurs heures d'utilisation du semoir.

Il existe donc un besoin d'une solution simple, fiable, facile à utiliser, et d'un coût raisonnable pour la détermination à chaque instant des valeurs de quantités de particules distribuées par chaque élément semeur d'un semoir, ou plus généralement d'une machine disposant d'organes de sortie de particules, afin de qualifier sa performance de répartition sur chacun des rangs (on parle de répartition longitudinale) et entre les rangs eux-mêmes (on parle de répartition transversale).

Il existe également un besoin d'une solution qui puisse s'adapter à un maximum d'éléments semeur présents sur le marché, et qui n'interfère pas avec les éléments de la machine.

Il existe également un besoin d'une solution qui puisse supporter l'hétérogénéité des particules utilisées dans le domaine du semi, et qui puisse s'adapter aux différentes tailles, vitesses et trajectoires de particules délivrées par les éléments semeurs.

Il existe par ailleurs un besoin d'une solution qui permette de réduire le temps de réglage ou d'étalonnage des machines agricoles, et de diminuer la pénibilité de ces contrôles pour les opérateurs.

### Exposé de l'invention

L'invention répond à ces besoins en proposant un module de mesure d'un flux de particules pour un banc de test mettant en œuvre au moins deux modules de mesure, ledit module de mesure étant destiné à être positionné en regard d'au moins un organe de sortie d'une machine agricole de distribution de particules pour recevoir l'ensemble des particules délivrées ledit au moins un organe de sortie, ledit module de mesure comprenant des moyens de collecte de particules en provenance dudit au moins un organe de sortie de la machine agricole et des moyens de mesure d'une quantité de particules en provenance des moyens de collecte, ledit module de mesure comprenant en outre des moyens de transfert des particules reliant les moyens de collecte audit moyens de mesure, lesdits moyens de transfert étant configurés pour réceptionner les particules s'écoulant de façon turbulente des moyens de collecte et les délivrer selon un écoulement contrôlé et cadencé dans les moyens de mesure.

L'invention propose ainsi un module de mesure d'un flux de particules destiné à être placé en vis-à-vis d'un ou de plusieurs organes de sortie d'une machine agricole et qui permet de réceptionner/collecter toutes les particules distribuées par ce ou ces organes de sortie en étant situé au plus près de ces derniers, et de mesurer en continu ou en quasi-continu une quantité de particules.

Un ou plusieurs organes de sortie d'une machine agricole peuvent être disposés au-dessus des moyens de collecte d'un module de mesure ou bien être disposés en partie au moins dans les moyens de collecte du module.

Chaque organe de sortie peut être un élément semeur d'un semoir, tel un élément semeur de type monograine, ou bien un conduit de sortie d'un épandeur d'engrais pneumatique.

L'invention propose de disposer entre les moyens de collecte et les moyens de mesure des moyens de transfert qui permettent d'assurer l'équivalent d'une discrétisation du flux continu de particules provenant des moyens de collecte.

Ce flux continu de particules issu d'un ou de plusieurs organes de sortie (des éléments semeurs dans le cas d'un semoir) selon un écoulement turbulent, qui peut éventuellement comprendre de l'air et donc un certain niveau de pression et/ou de vitesse, chute au sein des moyens de collecte. On entend par cela que les particules s'écoulent à une vitesse relativement importante et de manière chaotique ou désordonnée, avec des trajectoires diverses, le long des moyens de collecte et affluent vers les moyens de transfert avec une énergie importante.

Ces moyens de transfert qui isolent ou séparent les deux espaces de collecte et de mesure des particules permettent un passage cadencé et un écoulement contrôlé des particules dans les moyens de mesure. Autrement dit, les moyens de transfert sont conçus pour absorber et réduire l'énergie et la vitesse des particules affluant des moyens de collecte, et pour les délivrer en sortie dans les moyens de mesure avec une vitesse moindre et une énergie réduite, dans une même direction, et avec une pression moindre si le flux de particules en entrée comprend de l'air.

Ainsi, la mesure d'une quantité de particules n'est pas faussée par les chocs des particules qui arriveraient dans les moyens de mesure avec une vitesse élevée et une énergie importante. En effet, un flux d'air peut gêner la stabilisation du poids d'une balance de précision, ce qui nuit à la réactivité de la mesure du poids. Des graines arrivant trop vite gêneraient également la mesure. Du fait que le flux arrivant dans les moyens de mesure soit maitrisé, c'est-à-dire orienté, canalisé et avec une vitesse réduite, la mesure d'une quantité de particules est plus précise et réactive, sans perturbation induite par un éventuel flux d'air qui serait présent dans le flux de particules en amont des moyens de transfert.

On obtient donc une mesure plus précise et rapide d'une quantité de particules.

Dans un mode de réalisation particulier, ce module de mesure permet de peser les particules délivrées par une ou plusieurs sorties. Le module est configuré pour délivrer une mesure de poids par exemple pour la détermination du débit de particules (dP/dT) délivré par au moins un élément semeur d'une machine agricole de type semoir. Une telle mise en œuvre permet de limiter le nombre de manipulations à effectuer pour un utilisateur, notamment en lui évitant de devoir déplacer le bac de collecte pour aller le peser.

Le module qui est portatif n'est pas intrusif vis-à-vis de la machine agricole (un semoir par exemple) et de ses organes de sortie (les éléments semeurs dans ce cas de figure) et n'interfère pas avec la performance des organes de sortie que l'on cherche à mesurer.

Le module de mesure est conçu pour être mis en œuvre seul ou avec d'autres modules identiques sur un banc de test de sorte à pouvoir synchroniser les mesures issues de chacun des modules et déterminer la performance de la machine. Le banc de test a pour but de tester et d'effectuer des vérifications du fonctionnement d'un semoir assemblé en sortie d'usine notamment, prêt à utiliser pour un opérateur pour effectuer les semis dans les champs.

Le module de mesure peut être déplacé dans un champ par exemple, par l'intermédiaire d'un moyen de transport du type camionnette, pour mesurer individuellement la performance des organes de sortie d'une machine agricole après plusieurs heures d'utilisation sur le terrain et détecter une anomalie sur un ou plusieurs de ces organes de sortie. Pour cela, il peut être nécessaire de procéder à des adaptations pour intercaler le module de mesure qui consistent notamment à surélever le semoir, et débrancher et dévier des tuyaux de transport de graines.

Selon un premier mode de réalisation de l'invention, les moyens de transfert prennent la forme d'une écluse rotative comprenant une pluralité de pales définissant des cellules de transport des particules.

Selon une autre caractéristique particulière d'au moins un mode de réalisation de l'invention, les pales de ladite écluse sont en matériau souple.

De préférence, les pales de ladite écluse sont en polyuréthane de dureté comprise entre 50 et 90sh, préférentiellement entre 60 et 80sh et encore préférentiellement égale à 70 sh.

Selon une autre caractéristique particulière d'au moins un mode de réalisation de l'invention, le module de mesure comprend des moyens de contrôle de la vitesse de rotation de l'écluse rotative.

Selon une mise en œuvre particulière d'au moins un mode de réalisation de l'invention, l'écluse rotative comprend un rotor et au moins six cellules de transport des particules, les pales d'au moins deux cellules étant en contact avec le stator de l'écluse lors de la rotation cette dernière.

Préférentiellement, le volume d'une cellule de transport est compris entre 8 et 15 cm3, et encore préférentiellement égal à 11 cm3 environ.

Selon un deuxième mode de réalisation de l'invention, les moyens de transfert prennent la forme d'un élément creux comprenant un espace interne de réception de particules, ledit espace interne comprenant à une extrémité une ouverture d'entrée des particules apte à collecter des particules en provenance des moyens de collecte et à l'autre extrémité opposée une ouverture de sortie apte à délivrer les particules vers les moyens de mesure, l'élément creux étant configuré pour passer d'une position d'obturation de l'ouverture de sortie dans laquelle les particules en provenance des moyens de collecte sont réceptionnées au sein de l'espace interne et une position de libération de l'ouverture de sortie pour libérer les particules stockées dans l'espace interne vers les moyens de mesure.

Selon une mise en œuvre particulière de ce deuxième mode de réalisation de l'invention, les parois de l'élément creux sont en matériau souple et aptes à se déformer pour obturer ou libérer l'ouverture de sortie.

Selon une caractéristique particulière d'au moins un mode de réalisation de l'invention, dont lesdits moyens de collecte comprennent un réceptacle de collecte des particules comprenant une ouverture d'entrée des particules présentant une première section apte à collecter des particules en provenance dudit au moins un organe de sortie de la machine agricole et une ouverture de sortie présentant une deuxième section plus petite que la première section, la deuxième ouverture de sortie étant apte à délivrer les particules vers les moyens de mesure d'une quantité de particules, les parois du réceptacle de collecte étant configurées pour rassembler les particules depuis l'ouverture d'entrée vers l'ouverture de sortie.

Selon une autre caractéristique particulière d'au moins un mode de réalisation de l'invention, comprenant au moins un capteur de passage de particules, tel un capteur à fourche optique, disposé au niveau de l'ouverture d'entrée du réceptacle de collecte des particules.

Il est également proposé un mode de réalisation non revendiqué d'un module de mesure d'un flux de particules pour un banc de test mettant en œuvre au moins deux modules de mesure, ledit module de mesure étant destiné à être positionné en regard d'au moins un organe de sortie d'une machine agricole de distribution de particules pour recevoir l'ensemble des particules délivrées par ledit au moins organe de sortie, ledit module de mesure comprenant des premiers moyens de collecte de particules en provenance dudit au moins un organe de sortie de la machine agricole et des seconds moyens de mesure d'une quantité de particules réceptionnées, les premiers moyens de collecte étant aptes à délivrer les particules collectées aux seconds moyens de mesure.

Il est ainsi proposé un module de mesure d'un flux de particules destiné à être placé en vis-à-vis d'un ou de plusieurs organes de sortie d'une machine agricole, et qui permet de réceptionner/collecter toutes les particules distribuées par cet ou ces organes de sortie en étant situé au plus près de ces dernières, et de mesurer en continu ou en quasi-continu une quantité de particules.

Ce module de mesure comprend successivement des moyens de collecte configurés pour collecter la totalité des particules distribuées par un ou plusieurs organes de sortie et des moyens de mesure dissociés des moyens de collecte, de sorte à ce que la mesure ne soit pas parasitée par la collecte des particules en sortie du ou des organes de sortie de la machine agricole et de sorte à ce que la mesure soit la plus rapide et la plus précise possible.

En effet, les particules s'écoulent en sortie du ou des organes de sortie selon un écoulement turbulent et présentent une vitesse et une énergie relativement importante ainsi que des trajectoires variées que les moyens de collecte permettent d'orienter et canaliser vers les moyens de pesée avec une vitesse moindre et une énergie réduite.

Ainsi, la mesure d'une quantité de particules n'est pas faussée par les chocs des particules qui arriveraient dans les moyens de mesure avec une vitesse élevée et une énergie importante. En effet, des graines arrivant trop vite peuvent gêner la stabilisation du poids d'une balance de précision, ce qui nuit à la réactivité de la mesure du poids. On obtient donc une mesure plus précise et rapide d'une quantité de particules.

Un ou plusieurs organes de sortie d'une machine agricole peuvent être disposés au-dessus des moyens de collecte d'un module de mesure ou bien être disposés en partie au moins dans les moyens de collecte.

Ce module de mesure peut être utilisé seul pour mesurer individuellement la performance des différents organes de sortie d'une machine agricole.

Chaque organe de sortie peut être un élément semeur d'un semoir, tel un élément semeur de type monograine, ou bien un conduit de sortie d'un épandeur d'engrais pneumatique.

Il peut être mis en œuvre sur un banc de test en combinaison avec d'autres modules du même type de sorte à pouvoir synchroniser les mesures issues de chacun des modules et déterminer la performance de la machine.

Le banc de test a pour but de tester et d'effectuer des vérifications du fonctionnement d'un semoir assemblé en sortie d'usine notamment, prêt à utiliser pour un opérateur pour effectuer les semis dans les champs.

A titre d'exemple, ce module de mesure permet de peser les particules délivrées par un ou plusieurs organes de sortie de la machine agricole. Le module est configuré pour délivrer une mesure de poids par exemple pour la détermination du débit de particules (dP/dT) délivré par au moins un élément semeur d'une machine agricole de type semoir. Une telle mise en œuvre permet de limiter le nombre de manipulations à effectuer pour un utilisateur, notamment en lui évitant de devoir déplacer le bac de collecte pour aller le peser.

Le module qui est portatif n'est pas intrusif vis-à-vis de la machine agricole, un semoir par exemple, et de ses organes de sortie (les éléments semeurs dans ce cas de figure) et n'interfère pas avec la performance des organes de sortie que l'on cherche à mesurer.

Le module de mesure peut être déplacé pour effectuer des mesures sur le terrain, dans un champ par exemple, par l'intermédiaire d'un moyen de transport du type camionnette de sorte à mesurer et vérifier la performance du semoir après plusieurs heures d'utilisation sur le terrain et détecter une anomalie sur un ou plusieurs éléments semeurs du semoir. Pour cela, il peut être nécessaire de procéder à des adaptations pour intercaler le module de mesure qui consistent notamment à surélever le semoir, et débrancher et dévier des tuyaux de transport de graines.

D'autres caractéristiques de ce module de mesure non revendiqué sont décrites ci-après.

Lesdits moyens de collecte peuvent comprendre un réceptacle de collecte des particules comprenant une ouverture d'entrée des particules présentant une première section apte à collecter des particules en provenance dudit au moins un organe de sortie de la machine agricole et une ouverture de sortie présentant une deuxième section plus petite que la première section, la deuxième ouverture de sortie étant apte à délivrer les particules vers les moyens de mesure d'une quantité de particules, les parois du réceptacle de collecte étant configurées pour rassembler les particules depuis l'ouverture d'entrée vers l'ouverture de sortie.

Les parois du réceptacle de collecte sont ainsi configurées pour canaliser les particules depuis l'ouverture d'entrée vers l'ouverture de sortie.

Le ratio entre les première et deuxième sections peut être compris entre 3 :1 et 12 :1, et étant de préférence sensiblement égal à 8 :1.

Le réceptacle de collecte peut présenter une forme générale d'entonnoir, dont la section se réduit progressivement de l'ouverture d'entrée des particules à l'ouverture de sortie des particules.

L'ouverture d'entrée du réceptacle de collecte peut être de section sensiblement rectangulaire.

Cette ouverture d'entrée peut être de section rectangulaire ou présenter une section ovale ou en forme d'ellipse très allongée avec un ratio de longueur sur largeur sensiblement égal à 8 :1.

La longueur de l'ouverture d'entrée est mesurée selon l'axe d'avancement de la machine agricole et la largeur de l'ouverture d'entrée est mesurée selon l'axe transversal à cet axe d'avancement.

Le réceptacle de collecte peut comprendre un espace intérieur défini par au moins une paroi périphérique comprenant une portion formant rampe dirigée vers l'ouverture de sortie.

Le réceptacle de collecte peut comprendre deux parois longitudinales opposées et reliées entre elles par une paroi latérale et une paroi de fond comprenant ladite portion formant rampe.

La paroi de fond peut comprendre plusieurs portions, dont une portion formant rampe.

L'angle d'inclinaison de ladite portion de la paroi de fond formant rampe peut être inférieur à l'angle d'inclinaison des parois longitudinales et de ladite paroi latérale.

Ladite paroi latérale peut être de forme incurvée.

Le rayon de courbure de ladite paroi latérale incurvée peut être compris entre 1 et 6m, de préférence entre 2 et 4m.

Au moins une partie de ladite au moins une paroi périphérique peut être fabriquée dans un matériau souple.

Ladite au moins une partie de ladite au moins une paroi périphérique peut être constituée d'au moins un élément souple à plis ondulés.

Du fait qu'il soit plié à la façon d'un rideau ou d'un accordéon, la surface de l'élément souple présente des ondulations pour encore mieux absorber l'énergie des particules.

Ladite au moins une paroi périphérique du réceptacle de collecte peut comprendre des micro-perforations de passage d'air.

Lorsque les particules issues d'un organe de sortie de la machine agricole et arrivant dans les moyens de collecte sont mélangées avec de l'air de convoyage des particules, ces micro-perforations permettent l'évacuation de cet air de transport. La séparation de l'air et des particules avant la mesure (du poids par exemple) de ces particules permet de fiabiliser cette mesure. Ces micro-perforations sont bien évidemment dimensionnées pour retenir les particules au sein des moyens de collecte.

Les micro-perforations peuvent être de forme sensiblement carrée, de longueur préférentiellement comprise entre 0,3 et 0,6 mm.

Le module de mesure peut comprendre des moyens de basculement des moyens de mesure d'une position de réception d'une quantité de particules provenant des moyens de collecte vers une position de vida(n)ge desdits moyens de mesure.

Les moyens de mesure d'une quantité de particules réceptionnées peuvent appartenir au groupe comprenant :
- des moyens de pesage des particules, tels un capteur de pesage dynamique ;
- des moyens de comptage des particules, tels un capteur optique,
- des moyens de mesure d'un volume d'un ensemble de particules, tels un débitmètre avec roue à aubes.

### Liste des figures

D'autres caractéristiques et avantages de l'invention apparaîtront à la lecture de la description suivante de modes de réalisation, donnés à titre de simples exemples illustratifs et non limitatifs, et des dessins annexés, parmi lesquels :
- [Fig.1] : la figure 1 est une vue de côté d'un module de mesure selon un mode de réalisation de l'invention ;
- [Fig.2] : la figure 2 est une vue en perspective du module de mesure de la figure 1 montrant en transparence les moyens de transfert prenant la forme d'une écluse rotative ;
- [Fig.3] : la figure 3 est une vue en coupe transversale du module de mesure de la figure 1 ;
- [Fig.4A] : la figure 4A illustre très schématiquement un autre exemple de moyens de transfert mis en œuvre dans un module de mesure conforme à l'invention dans une première position ;
- [Fig.4B] : la figure 4B montre les moyens de transfert de la figure 4A dans une deuxième position ;
- [Fig.5A] : la figure 5A illustre encore un autre exemple de moyens de transfert mis en œuvre dans un module de mesure conforme à l'invention dans une première position ;
- [Fig.5B] : la figure 5B montre les moyens de transfert de la figure 5A dans une deuxième position ;
- [Fig.6] : la figure 6 est un logigramme montrant les différentes opérations successives de collecte, transfert et pesée assurées par un module de mesure selon l'invention ;
- [Fig.7] : la figure 7 est une vue de côté d'un module de mesure selon un mode de réalisation non revendiqué ;
- [Fig.8] : la figure 8 est une vue en perspective du module de mesure de la figure 7.
- [Fig.9] : la figure 9 est un logigramme montrant les différentes opérations successives de collecte et de pesée assurées par le module de mesure des figures 7 et 8.

### Description de modes de réalisation

On discute essentiellement, par la suite, des semoirs en lignes ou monograines, aptes à délivrer des matériaux en grains, tels que des graines de semence ou des particules d'engrais ou de protection des semis (anti-limaces par exemple) ou encore des graines de produits phytosanitaires.

De tels semoirs peuvent être portés ou tractés.

Les mêmes explications et commentaires s'appliquent également pour d'autres machines agricoles de distribution de particules comprenant un ou plusieurs organes de sortie de particules.

Les semoirs à grains sont équipés généralement d'une trémie destinée à contenir les graines de semences, un système de distribution spécifique, par exemple pneumatique, gravitaire ou mécanique avec convoyeur, courroie ou brosse, et des organes de mise en terre dits éléments semeurs généralement identiques, montés parallèlement les uns aux autres sur un châssis de semoir, et définissant chacun une ligne de semis. Chaque élément semeur est apte à incorporer des graines, et le cas échéant un engrais associé, dans le sol pour obtenir un espacement régulier sur la ligne de semis correspondante.

Un semoir permet donc de semer les graines en lignes régulièrement espacées, c'est-à-dire sur plusieurs lignes ou rangs (36 ou 48 rangs par exemple), à une profondeur réglable et avec une certaine densité, régulée par des organes de distribution.

### Description d'un mode de réalisation particulier de l'invention

On présente en relation avec les figues 1 à 3 un module de mesure d'un flux de particules selon un mode de réalisation de l'invention.

Un tel module de mesure est par exemple destiné à être mis en œuvre avec d'autres modules identiques pour la détermination à chaque instant des valeurs de quantités de particules distribuées par chaque élément semeur d'un semoir, étant entendu que les particules s'écoulent généralement à travers les lignes de distribution vers chaque élément semeur dans un flux sensiblement continu. Le module de mesure se positionne toujours à la sortie ou l'extrémité de l'élément semeur ES, c'est-à-dire au niveau du soc.

Le module de mesure 1 comprend successivement des moyens de collecte 11 de particules en provenance d'un élément semeur ES d'un semoir (illustré schématiquement par un rectangle) qui est en position de semis et des moyens de mesure 12 d'une quantité de particules en provenance des moyens de collecte 11. L'ensemble est monté sur un châssis 14 en forme de « L » présentant deux pieds de support 141. Le châssis comprend en outre des moyens d'accrochage (des crochets 142 et grenouillères 143 dans l'exemple illustré) du module de mesure 1 sur un banc de test (non représenté) qui permettent une installation et un réglage en position rapide sur ce dernier et un démontage aisé.

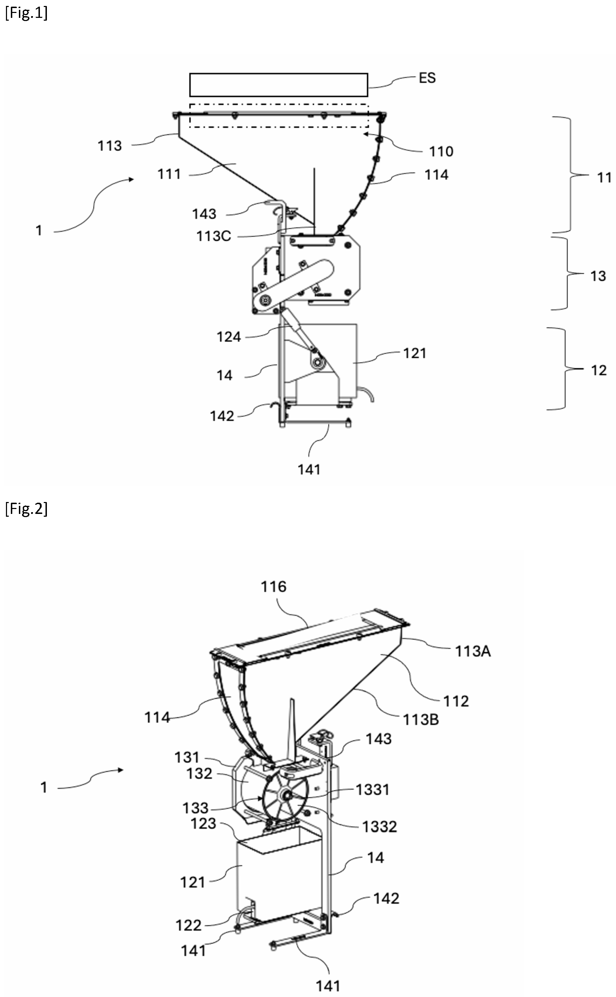

Sur la figure 1, l'élément semeur ES est situé légèrement au-dessus des moyens de collecte 11 mais pourrait être situé en partie au moins au sein de l'espace intérieur des moyens de collecte 11 comme représenté en pointillés sur cette même figure 1.

On note que les particules en provenance de l'élément semeur ES et tombant dans les moyens de collecte 11 peuvent être mélangées avec de l'air de convoyage ou de transport.

Dans un autre cas de figure, ces particules peuvent tomber par gravité, sans être mélangée à de l'air, avec une énergie et une vitesse modérées.

Encore dans un autre cas de figure, pour un semoir monograine par exemple avec un transport des particules via une courroie à brosse, ces particules peuvent tomber dans les moyens de collecte 11 de façon accélérée mais sans air, et ici avec une vitesse et une énergie importantes .

Dans une variante non illustrée, le châssis ne présente pas de pieds de support mais est muni d'une poignée de préhension par exemple. Dans ce cas de figure, il n'est pas nécessaire de poser le module de mesure au sol au cours d'un test dans un champ par exemple, le module de mesure pouvant être fixé sur la machine agricole à tester par des moyens de fixation adaptés.

Le module de mesure 1 comprend en outre des moyens de transfert 13 des particules en provenance des moyens de collecte 11 vers les moyens de mesure 12, qui sont situés sous les moyens de collecte 11 et qui sont configurés pour ralentir les particules en provenance des moyens de collecte 11 et les délivrer de façon contrôlée et cadencée dans les moyens de mesure 12.

Dans l'exemple illustré, les moyens de collecte 11 comprennent un réceptacle de collecte 110 des particules comprenant un espace intérieur défini par au moins une paroi périphérique et comprenant une portion formant rampe dirigée vers l'ouverture de sortie.

Dans l'exemple illustré, le réceptacle de collecte 110 comprend deux parois longitudinales 111, 112 opposées et reliées entre elles par une paroi latérale 114 et une paroi de fond 113 disposées en regard.

Le réceptacle de collecte 110 comprend également une ouverture d'entrée 116 des particules présentant une première section apte à collecter des particules en provenance de l'élément semeur ES de la machine agricole sans que le réceptacle soit au contact de l'élément semeur et une ouverture de sortie 117 présentant une deuxième section plus petite que la première section, l'ouverture de sortie 117 étant apte à délivrer les particules collectées vers les moyens de transfert 13 des particules.

Dans l'exemple illustré, la paroi de fond 113 comprend une première portion 113A plane située du côté de l'ouverture d'entrée 116 et qui est prolongée par une deuxième portion 113B formant rampe, elle-même prolongée par une troisième portion 113C plane située du côté de l'ouverture de sortie 117.

A titre d'exemple, le ratio entre la première section de l'ouverture d'entrée 116 et la deuxième section de l'ouverture de sortie 117 est compris entre 3 :1 et 12 :1, et est préférentiellement égal à environ 8 :1.

Un tel ratio présente plusieurs avantages. Il permet avantageusement de prévoir que le réceptacle de collecte puisse être alimenté en particules provenant de plusieurs doseurs ou éléments semeurs distincts, associés à une ou plusieurs trémies de la machine agricole. Ainsi, il est possible d'alimenter simultanément le module de mesure de plusieurs matériaux en grains à semer, par exemple des féveroles, du colza et de l'engrais. La grande ouverture permet aussi de récolter l'ensemble des graines qui arrivent de façon turbulente et désordonnée à la façon d'un entonnoir qu'on veut assez large en entrée pour tout collecter.

Le module de mesure est disposé de sorte que la longueur de l'ouverture d'entrée 116 correspond à l'axe d'avancement de la machine agricole et la largeur de l'ouverture d'entrée 116 correspond à l'axe transversal à cet axe d'avancement.

L'ouverture d'entrée 116 du réceptacle de collecte 110 est ici de section rectangulaire et permet d'adapter le module à différents types d'éléments semeurs. Une grande ouverture en haut du réceptacle de collecte 110 permet de s'adapter à un maximum d'organes de sortie, tels des éléments semeurs, présents sur le marché et au flux de particules sans modifier le réglage machine préconisé par le constructeur, et permet de recevoir plusieurs sorties de particules identiques ou différentes.

Le réceptacle de collecte 110 présente ici une forme générale d'entonnoir, dont la section se réduit progressivement de l'ouverture d'entrée 116 des particules à l'ouverture de sortie 117 des particules. Les deux parois longitudinales 111, 112 opposées ne s'étendent pas parallèlement entre elles dans l'exemple illustré mais se rapprochent progressivement depuis l'ouverture d'entrée 116 vers l'ouverture de sortie 117.

La deuxième portion 113B de la paroi de fond 113 du réceptacle de collecte 110 forme dans cet exemple une rampe dirigée vers l'ouverture de sortie 117. L'angle d'inclinaison de cette rampe est inférieur à l'angle d'inclinaison des parois longitudinales 111, 112 et de la paroi latérale 114.

La paroi latérale 114 du réceptacle de collecte 110 est ici de forme incurvée, les parois longitudinales 111, 112 étant planes. Cette forme incurvée de la paroi latérale 114 permet d'orienter vers le bas le flux de particules sortant de l'élément semeur ES malgré l'angle d'éjection propre à chaque élément semeur. Elle permet d'absorber l'énergie cinétique des particules tombant sur cette paroi latérale 114 incurvée.

Dans une variante non illustrée, la paroi latérale 114 du réceptacle de collecte 110 est plane.

Le rayon de courbure de la paroi latérale 114 incurvée est compris entre 1 et 6m, de préférence entre 2 et 4m, par exemple 3m.

Les parois du réceptacle de collecte 110 sont configurées pour canaliser ou rassembler le flux de particules depuis l'ouverture d'entrée 116 vers l'ouverture de sortie 117 communiquant avec les moyens de transfert 13 des particules.

Les moyens de mesure 12 d'une quantité de particules provenant des moyens de collecte 11 appartiennent au groupe comprenant :
- des moyens de pesage des particules, tels un capteur de pesage dynamique ;
- des moyens de comptage des particules, tels un capteur optique,
- des moyens de mesure d'un volume d'un ensemble de particules, tels un débitmètre avec roue à aubes.

Dans l'exemple illustré, les moyens de mesure 12 d'une quantité de particules comprennent un bac de pesée 121 et un capteur de pesée 122 disposé sous le bac de pesée 121 et apte à peser les particules réceptionnées dans le bac de pesée 121. Ceci permet une mesure de quantité de particules précise.

Le bac de pesée 121 est dans l'exemple illustré de forme parallélépipédique. Il comprend une ouverture supérieure 123 apte à collecter des particules en provenance du réceptacle de collecte 110 via les moyens de transfert 13 des particules. Les particules tombent par gravité dans le bac de pesée 121. L'ouverture supérieure 123 s'étend sensiblement en-dessous de l'ouverture de sortie des moyens de transfert 13, l'écart entre ces deux ouvertures étant réduit de sorte à ce que le module de mesure soit compact en hauteur. L'ouverture supérieure 123 du bac de pesée 121 est plus importante que l'ouverture de sortie des moyens de transfert 13.

Ce module de mesure 1 qui est portatif peut être utilisé de façon autonome pour faire des mesures sur le terrain également. Dans ce cas d'utilisation, il n'y a pas de banc de test, on utilise le module de mesure 1 directement dans le champ.

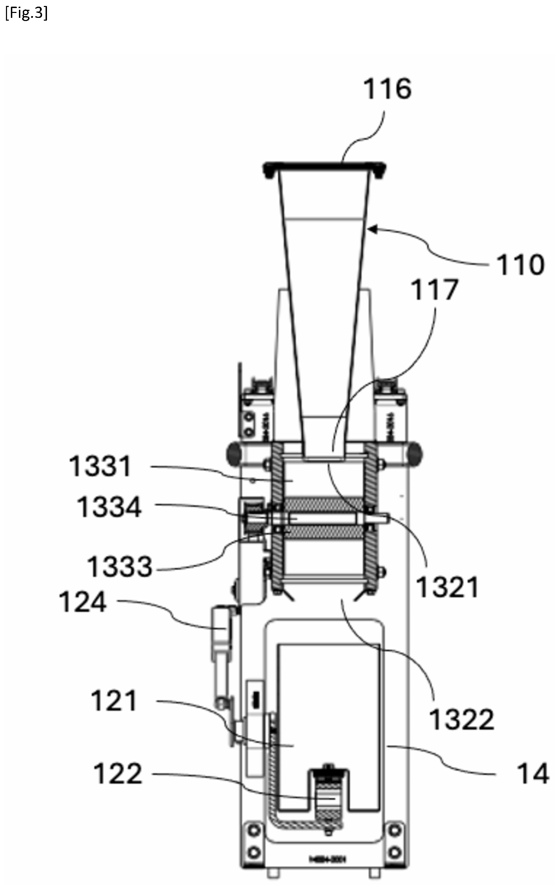

Dans l'exemple illustré, comme visible sur les figures 2 et 3, les moyens de transfert 13 comprennent un carter 131 de forme parallélépipédique dans lequel est disposée une chambre 132 cylindrique (appelée également stator) au sein de laquelle est montée une écluse 133 rotative. Cette écluse 133 rotative comprend une pluralité de pales 1331 définissant des cellules ou alvéoles 1332 de réception et de transport des particules des moyens de collecte 11 vers les moyens de mesure 12. Les pales 1331 sont réparties autour d'un rotor 1333 qui est mobile en rotation autour d'un arbre d'entrainement 1334. Le document EP 3 766 325 décrit une telle écluse rotative.

Le rotor 1333 peut, par exemple, être entraîné en rotation par l'intermédiaire d'un moteur accompagné d'une unité de commande électrique de ce moteur. La transmission de puissance peut être faite par l'intermédiaire d'une courroie.

Selon une mise en œuvre possible, le module de mesure comprend des moyens de contrôle de la vitesse de rotation du rotor 1333. La vitesse de rotation de ce dernier peut être fonction de la présence d'air dans le flux de particules en entrée de l'écluse, du type de produit mesuré ou de la dose de produit théorique à mesurer, par exemple.

Dans l'exemple illustré, le module de mesure 1 comprend un moto-réducteur 134 apte à entrainer en rotation le rotor 1333 ce qui présente l'avantage d'être compact.

Selon une mise en œuvre possible, les pales 1331 de l'écluse 133 sont en matériau souple.

Par rapport à des pales rigides, la pression de contact entre les pales 1331 et la paroi intérieure de la chambre 132 cylindrique (ou stator) est diminuée. Cela permet de générer une contrainte plus faible et donc de diminuer le couple d'entraînement par rapport à des pales qui seraient rigides.

Dans le mode de réalisation présenté, les pales 1331 sont en polyuréthane, de dureté comprise entre 50 et 90sh, préférentiellement entre 60 et 80sh et encore préférentiellement de 70 sh. Toutefois, dans une variante de ce mode de réalisation on pourrait également prévoir des pales qui soient dans un autre matériau, par exemple en caoutchouc, ou dans un autre matériau élastomère. Les pales 1331 détaillées ici présentent une épaisseur maximale sensiblement égale à 3mm.

La chambre 132 cylindrique comprend une ouverture d'admission 1321 des particules qui est apte à recevoir des particules en provenance des moyens de collecte 11 et une ouverture d'évacuation 1322 apte à délivrer les particules sortant du dispositif d'écluse 133 dans les moyens de mesure 13.

Le dispositif d'écluse 133 est disposé en amont des moyens de mesure 13 et en aval des moyens de collecte 11 directement dans le flux d'écoulement des particules en sortie des moyens de collecte 11, les graines tombant par gravité dans les alvéoles 1332 de l'écluse 133 à mesure que celles-ci tournent. Les graines transportées par les alvéoles 1332 se déversent ensuite par gravité dans le bac de pesée 121 à mesure que les alvéoles 1332 de l'écluse 133 tournent. Autrement dit, les alvéoles 1332 permettent une à une de réceptionner les particules provenant des moyens de collecte 11 puis de les déverser de façon contrôlée et cadencée dans les moyens de mesure 12 sous l'action de la gravité.

Les moyens de collecte 11, l'ouverture d'entrée 1321 et l'ouverture de sortie 1322 de l'écluse 133 sont ménagés de telle sorte que les particules suivent le chemin formé par ces éléments du fait de la gravité.

L'ensemble constitué des moyens de collecte 11, des moyens de transfert 13 et des moyens de pesée 12 est compact, du fait de l'agencement relatif de ces trois éléments.

Le volume d'une alvéole 1332 est de préférence compris entre 8 et 15 cm3 et choisi selon les vitesses et les débits de graines à mesurer, et encore de préférence sensiblement égal à 11 cm3.

Dans cet exemple, l'écluse 133 comprend huit alvéoles 1332. Il est à noter que le nombre de pâles de l'écluse 133, et donc le nombre d'alvéoles, est notamment fonction de la fréquence de pesée souhaitée.

De préférence, l'écluse 133 comprend au moins six alvéoles, dont deux alvéoles dont les pales sont en contact avec le stator au cours de la rotation de l'écluse.

Au cours de sa rotation, l'écluse 133 alimente le bac de pesée 121 et la pesée des particules réceptionnées dans le bac de pesée 121 est initiée lorsque l'écluse 133 arrête de tourner. Le capteur de pesée 122 délivre un signal de mesure du poids qui est traité soit localement par une unité de traitement comprise dans le module de mesure ou à distance, par exemple dans un banc de test (l'unité de traitement peut être configurée pour obtenir un signal de débit massique par une dérivée dans le temps d'une mesure de poids issue du module de mesure).

Une telle disposition permet de recevoir dans l'écluse des particules ayant des vitesses, trajectoires et énergies différentes (selon donc un écoulement turbulent), et de les délivrer de façon contrôlée et cadencée dans les moyens de mesure 12. Les particules tombent ainsi verticalement dans les moyens de mesure 12 avec une vitesse moindre et une énergie réduite, dans une même direction.

La mise en œuvre d'une écluse rotative est avantageuse en ce sens qu'elle s'adapte aux différentes tailles, vitesses et trajectoires de particules, et est capable de transférer différents types de graines, notamment des graines de colza ou des féverolles, à des débits très différents, de 2 à 250 graines par seconde par exemple.

L'écluse 133 rotative permet éventuellement de neutraliser le flux d'air en sortie des éléments semeurs pour permettre une pesée plus précise. Autrement dit, l'écluse rotative 133 permet de dissocier l'air du flux de particules en provenance des éléments semeurs afin de permettre une mesure de quantité de particules (une pesée par exemple) plus précise sans perturbation induite par le flux d'air.

Le module de mesure est peu encombrant en largeur (moins de 20 cm) et longueur (moins de 50 cm) ce qui permet de mesurer la performance de machines agricoles de type semoirs avec des écartements serrés. Il présente en outre un poids raisonnable autour de 10kg. Ce module de mesure 1 est ainsi utilisable et déplaçable facilement pour effectuer un contrôle.

Dans un mode de réalisation particulier, au moins une partie de la paroi périphérique est fabriqué dans un matériau souple. Dans le mode de réalisation présenté, la paroi latérale 114 incurvée est fabriquée dans un tel matériau souple.

A titre d'exemple, la paroi latérale 114 peut être constituée d'un filet ou d'une toile pliée de sorte à former une surface ondulée qui permet d'amortir les particules et de minimiser les rebonds de particules (paroi anti-rebond) provenant de l'élément semeur. Cette paroi latérale 114 incurvée est de préférence une paroi avec une forte pente de sorte à ne pas freiner l'écoulement des particules vers le bas du réceptacle de collecte 110.

Lorsque la paroi latérale 114 est constituée d'un filet, l'air de transport éventuellement présent dans le flux de particules en provenance de l'élément semeur ES dans les moyens de collecte 11 peut être évacué entre les mailles du filet, de sorte à ne pas fausser la mesure de la quantité de graines qui est mise en œuvre par le biais des moyens de mesure 12 situés en aval des moyens de collecte 11. Les mailles du filet sont dimensionnées pour retenir les particules et évacuer aisément l'air de transport mélangé aux particules.

Plus généralement, au moins une partie de la paroi périphérique du réceptacle de collecte 110 peut être constituée d'au moins un élément souple permettant d'amortir l'énergie des particules.

La paroi peut présenter une forme ondulée ou être pliée en accordéon pour encore mieux absorber l'énergie des particules at amortir ces dernières.

Avantageusement, au moins une paroi périphérique du réceptacle de collecte 110 peut comprendre des micro-perforations de passage d'air.

Ces micro-perforations peuvent correspondre aux trous formés par les mailles d'un filet obturant une ouverture ménagée dans ladite au moins une paroi périphérique.

Les micro-perforations peuvent être de forme sensiblement carrée, de longueur préférentiellement comprise entre 0,3 et 0,6 mm.

Lorsque les particules issues d'un organe de sortie de la machine agricole et arrivant dans les moyens de collecte sont mélangées avec de l'air de convoyage des particules, ces micro-perforations permettent l'évacuation de cet air de transport. La séparation de l'air et des particules avant la mesure (du poids par exemple) de ces particules permet de fiabiliser cette mesure. Ces micro-perforations sont bien évidemment dimensionnées pour retenir les particules au sein des moyens de collecte.

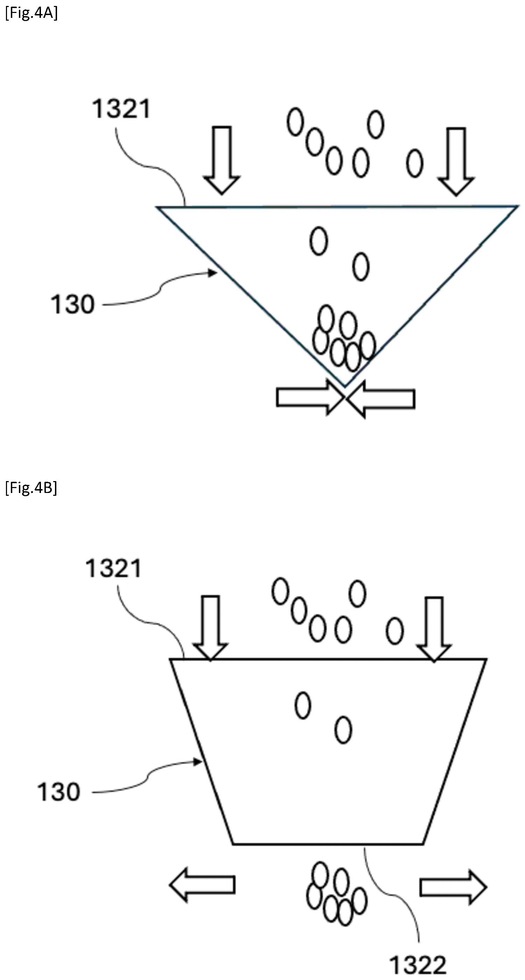

Dans un autre mode de réalisation illustré sur les figures 4A et 4B, les moyens de transfert 13 prennent la forme d'un élément creux ou valve 130 comprenant un espace interne de réception de particules issues de moyens de collecte 11.

L'élément creux ou valve 130 comprend à une extrémité une ouverture d'entrée 1321 des particules qui est apte à collecter des particules en provenance des moyens de collecte 11 et à l'autre extrémité opposée une ouverture de sortie 1322 apte à délivrer les particules vers les moyens de mesure 12.

L'élément creux ou valve 130 est configuré pour passer d'une position d'obturation de l'ouverture de sortie 1322 (figure 4A) dans laquelle les particules en provenance des moyens de collecte 11 sont réceptionnées au sein de l'espace interne de l'élément creux et une position de libération de l'ouverture de sortie 1322 (figure 4B) pour libérer les particules stockées dans l'espace interne de l'élément creux vers les moyens de mesure 12.

De la même façon, la valve 130 réceptionne des particules ayant des vitesses, trajectoires et énergies différentes (selon donc un écoulement turbulent) dans la position d'obturation de la figure 4A, et les délivre de façon contrôlée et cadencée dans les moyens de mesure 12 dans la position de libération de la figure 4B. Les particules tombent ainsi verticalement dans les moyens de mesure 12 avec une vitesse moindre et une énergie réduite, dans une même direction.

De façon avantageuse, les parois de l'élément creux sont en matériau souple et aptes à se déformer pour obturer ou libérer l'ouverture de sortie 1322. L'élément creux ou valve 130 est de préférence pilotée par pression. Un exemple de valve est présenté dans le document EP 3 659 417.

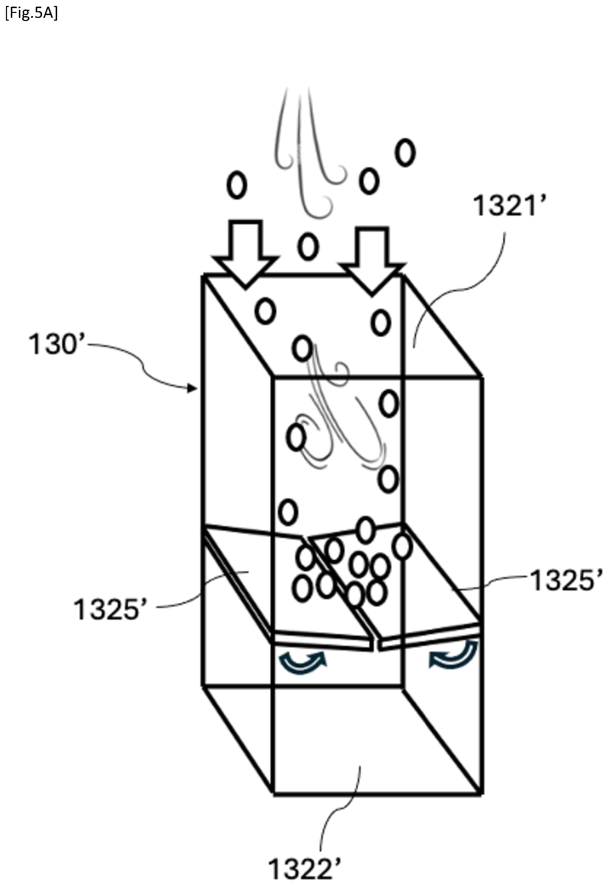

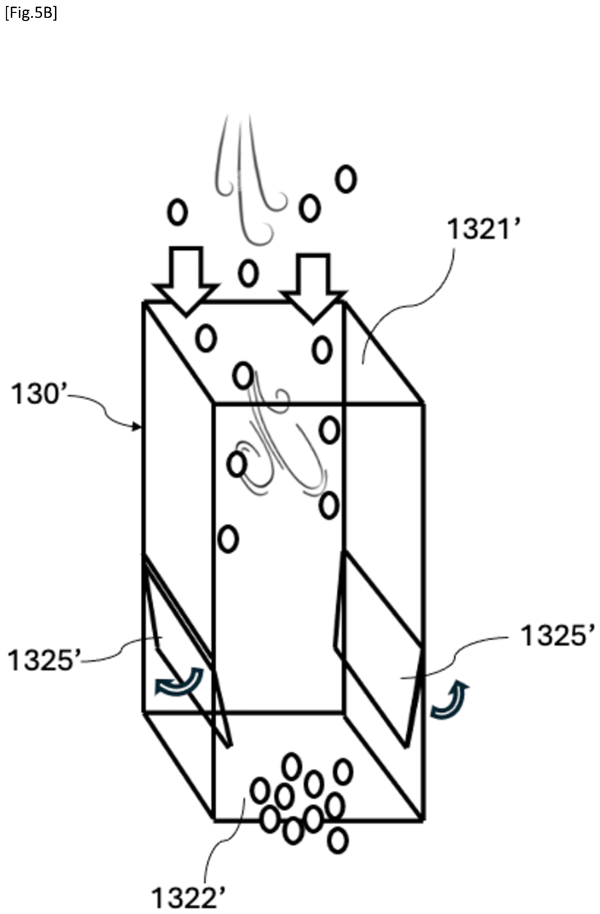

Un ou plusieurs éléments de fermeture mobiles pourraient obturer ou libérer l'ouverture de sortie d'une telle valve dans une variante de réalisation. Ainsi, dans l'exemple illustré sur les figures 5A et 5B, les moyens de transfert 13 prennent la forme d'un élément creux 130' comprenant un espace interne de réception de particules issues de moyens de collecte 11. L'élément creux 130' comprend à une extrémité une ouverture d'entrée 1321' des particules qui est apte à collecter des particules en provenance des moyens de collecte 11 et à l'autre extrémité opposée une ouverture de sortie 132'2 apte à délivrer les particules vers les moyens de mesure 12. L'ouverture de sortie 1322' est obturée ou libérée par deux volets 1325' mobiles. En position fermée de ces volets 1325', les particules sont réceptionnées au sein de l'élément creux 130'. Lorsque les volets 1325' pivotent de leur position fermée vers leur position d'ouverture, les particules collectées au sein de l'élément creux 130' peuvent s'écouler vers les moyens de mesure 12. L'élément creux 130' délivre ainsi les particules selon un écoulement contrôlé et cadencé dans les moyens de mesure 12.

Les moyens de transfert assurent donc une fonction de déplacement des particules comme dans l'écluse rotative ou une fonction de passage des particules, sans déplacement, comme avec le clapet décrit ci-avant (figures 4A à 5B) ou bien avec un circuit de passage des particules en zig-zag, de préférence à une fréquence élevée.

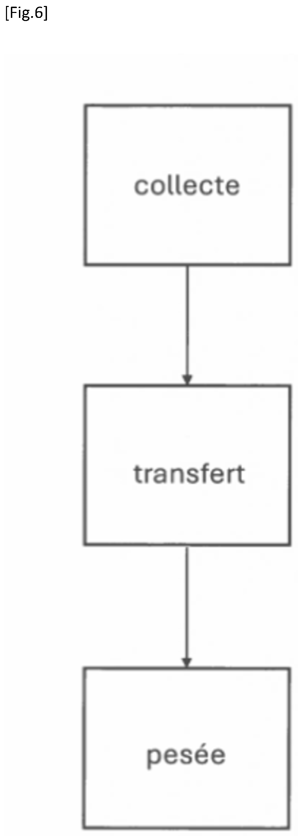

Les trois opérations successives assurées par un module de mesure selon l'invention sont représentées sur le logigramme de la figure 6.

Dans l'exemple illustré, le module de mesure 1 comprend des moyens de basculement 124 (un vérin dans cet exemple) du bac de pesée 121 des particules d'une position de collecte vers une position de vida(n)ge du bac de pesée 121. A la fin de la pesée, il est ainsi aisé de vider le bac de pesée 121 et de faire une autre mesure si besoin. La mesure du poids est interrompue le temps de la vidange. Grâce au moyen de basculement de type vérin, le bac de pesée 121 peut être vidé à distance (sans intervention d'un opérateur) et selon une procédure pouvant être automatique.

Il est possible de placer plusieurs modules de mesure 1 côte à côte et les associer chacun à un ou plusieurs éléments semeurs d'un semoir, et de synchroniser les mesures du poids de plusieurs modules de mesure pour mesurer la répartition transversale en lignes ou rangs du semoir sur la largeur de travail et établir un diagnostic de la performance d'un semoir en sortie d'usine ou sur le terrain après plusieurs heures d'utilisation. La mesure des quantités issus des capteurs de mesure de chaque module peut être transmise vers un dispositif de traitement distinct des modules de mesure qui peut déterminer une quantité (poids par exemple) de graines sur chacun des rangs et comparer une quantité mesurée avec une quantité théorique de graines à semer pour un ou plusieurs rangs donnés du semoir. Ceci permet de contrôler le bon fonctionnement de chaque élément semeur du semoir et de détecter une éventuelle anomalie ou dysfonctionnement sur un ou plusieurs éléments semeurs du semoir. Cette anomalie peut être liée au fait que l'élément semeur est partiellement ou totalement obturé ce qui nécessite l'intervention d'un opérateur.

Le module de mesure est adapté pour mesurer des quantités de graines de taille et de forme différentes, par exemple des graines allongées telles que l'orge, l'avoine ou le blé, des petites graines allongées telles que le lin ou encore des petites graines rondes comme le colza.

D'autres variantes non illustrées sont décrites ci-après.

Le réceptacle de collecte et le bac de pesée du module de mesure peuvent être de toute autre forme.

Le réceptacle de collecte 110 peut prendre une forme générale tronconique, dont la section se réduit progressivement de l'ouverture d'entrée 116 des particules à l'ouverture de sortie 117 des particules.

Le réceptacle de collecte 110 peut présenter une portion supérieure de forme générale tronconique et une portion inférieure de forme générale cylindrique.

Les parois du réceptacle de collecte 110 sont configurées pour canaliser ou rassembler le flux de particules depuis l'ouverture d'entrée 116 vers l'ouverture de sortie 117 communiquant avec les moyens de mesure 12.

Le module de mesure peut comprendre au moins un capteur de passage de particules, tel un capteur à fourche optique, disposé au niveau de l'ouverture d'entrée 116 du réceptacle de collecte 110 des particules permettant d'effectuer une mesure de la répartition longitudinale des particules en sortie du ou des éléments semeurs correspondants.

Les moyens de mesure peuvent se présenter sous la forme d'un bac de mesure prenant une forme générale tronconique.

Bien que l'on ait décrit le module de mesure pour un semoir, il est clair que la même approche peut s'appliquer à d'autres machines agricoles.

Le module de mesure est adapté en particulier mais non exclusivement pour mesurer la performance de semoirs pneumatiques et mécaniques. Il est également adapté pour mesurer la performance des épandeurs d'engrais pneumatiques qui de façon connue comprennent une rampe équipée de plusieurs organes de sortie prenant la forme de conduits ou tuyaux de sortie répartis le long de cette rampe et prenant la forme de conduits ou tuyaux de sortie pouvant être équipés de diffuseurs ou de palettes d'éclatement.

Il n'est toutefois pas adapté pour mesurer la performance des épandeurs centrifuges.

On rappelle plus généralement que l'invention ne se limite pas aux exemples décrits et représentés.

### Description d'un mode de réalisation non revendiqué

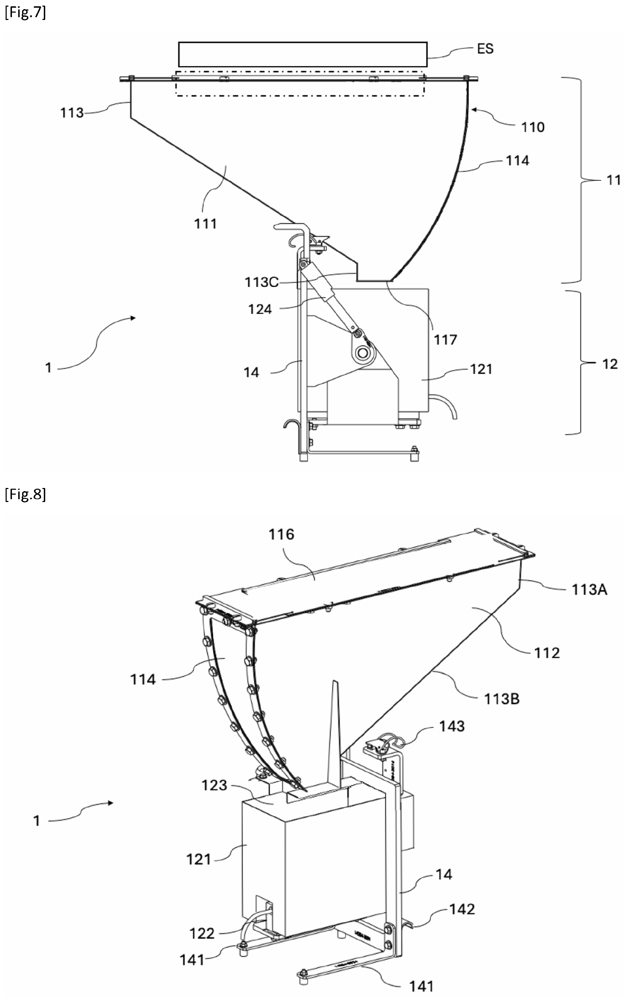

On présente en relation avec les figures 7 à 9 un mode de réalisation non revendiqué d'un module de mesure d'un flux de particules.

Un tel module de mesure est par exemple destiné à être mis en œuvre avec d'autres modules identiques pour la détermination à chaque instant des valeurs de quantités de particules distribuées par chaque élément semeur ES d'un semoir, étant entendu que les particules s'écoulent généralement à travers les lignes de distribution vers chaque élément semeur ES dans un flux sensiblement continu. Le module de mesure se positionne toujours à la sortie ou l'extrémité de l'élément semeur ES, c'est-à-dire au niveau du soc.

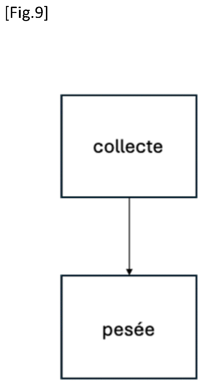

Le module de mesure 1 comprend successivement des moyens de collecte 11 de particules en provenance d'un élément semeur ES d'un semoir (illustré schématiquement par un rectangle sur la figure 7) qui est en position de semis et des moyens de mesure 12 d'une quantité de particules en provenance des moyens de collecte 11. Ces deux opérations successives assurées par le module de mesure sont représentées sur le logigramme de la figure 9. L'ensemble est monté sur un châssis 14 en forme de « L » présentant deux pieds de support 141. Le châssis comprend en outre des moyens d'accrochage (des crochets 142 et grenouillères 143 dans l'exemple illustré) du module de mesure 1 sur un banc de test (non représenté) qui permettent une installation et un réglage en position rapide sur ce dernier et un démontage aisé.

Sur la figure 7, l'élément semeur ES est situé légèrement au-dessus des moyens de collecte 11 mais pourrait être situé en partie au moins au sein de l'espace intérieur des moyens de collecte 11 comme représenté en pointillés sur cette même figure 7.

Dans une variante non illustrée, le châssis ne présente pas de pieds de support mais est muni d'une poignée de préhension par exemple. Dans ce cas de figure, il n'est pas nécessaire de poser le module de mesure au sol au cours d'un test dans un champ par exemple, le module de mesure pouvant être fixé sur la machine agricole à tester par des moyens de fixation adaptés.

Dans l'exemple illustré des figures 7 et 8, les moyens de collecte 11 comprennent un réceptacle de collecte 110 des particules comprenant un espace intérieur défini par au moins une paroi périphérique comprenant une portion formant rampe dirigée vers l'ouverture de sortie.

Dans l'exemple illustré des figures 7 et 8, le réceptacle de collecte 110 comprend deux parois longitudinales 111, 112 opposées et reliées entre elles par une paroi latérale 114 et une paroi de fond 113 disposées en regard.

Le réceptacle de collecte 110 comprend également une ouverture d'entrée 116 des particules présentant une première section apte à collecter des particules en provenance de l'élément semeur de la machine agricole sans que le réceptacle soit au contact de l'élément semeur ES et une ouverture de sortie 117 présentant une deuxième section plus petite que la première section, l'ouverture de sortie 117 étant apte à délivrer les particules collectées vers les moyens de mesure 12.

A titre d'exemple, le ratio entre les première et deuxième sections est compris entre 3 :1 et 12 :1, et est préférentiellement égal à environ 8 :1.

Un tel ratio présente plusieurs avantages. Il permet avantageusement de prévoir que le réceptacle de collecte puisse être alimenté en particules provenant de plusieurs éléments semeurs distincts, associés à une ou plusieurs trémies de la machine agricole. Ainsi, il est possible d'alimenter simultanément le module de mesure de plusieurs matériaux en grains à semer, par exemple des féveroles, du colza et de l'engrais. La grande ouverture permet aussi de récolter l'ensemble des graines qui arrivent de façon turbulente et désordonnée à la façon d'un entonnoir qu'on veut assez large en entrée pour tout collecter.

Le module de mesure est disposé de sorte que la longueur de l'ouverture d'entrée correspond à l'axe d'avancement de la machine agricole et la largeur de l'ouverture d'entrée correspond à l'axe transversal à cet axe d'avancement.

Dans l'exemple illustré des figures 7 et 8, la paroi de fond comprend une première portion 113A plane située du côté de l'ouverture d'entrée 116 et qui est prolongée par une deuxième portion 113B formant rampe (figure 8), elle-même prolongée par une troisième portion 113C plane située du côté de l'ouverture de sortie 117 (figure 7).

L'ouverture d'entrée 116 du réceptacle de collecte 110 est ici de section rectangulaire et permet d'adapter le module à différents types d'éléments semeurs. Une grande ouverture en haut du réceptacle de collecte 110 permet de s'adapter à un maximum d'organes de sortie, tels des éléments semeurs, présents sur le marché et au flux de particules sans modifier le réglage machine préconisé par le constructeur, et permet de recevoir plusieurs sorties de particules identiques ou différentes.

Le réceptacle de collecte 110 présente ici une forme générale d'entonnoir, dont la section se réduit progressivement de l'ouverture d'entrée 116 des particules à l'ouverture de sortie 117 des particules. Les deux parois longitudinales 111, 112 opposées ne s'étendent pas parallèlement entre elles mais se rapprochent progressivement de l'ouverture d'entrée 116 vers l'ouverture de sortie 117.

Les parois du réceptacle de collecte 110 sont configurées pour canaliser ou rassembler le flux de particules depuis l'ouverture d'entrée 116 vers l'ouverture de sortie 117 communiquant avec les moyens de mesure 12.

Les moyens de mesure 12 d'une quantité de particules provenant des moyens de collecte 11 appartiennent au groupe comprenant :
- des moyens de pesage des particules, tels un capteur de pesage dynamique ;
- des moyens de comptage des particules, tels un capteur optique,
- des moyens de mesure d'un volume d'un ensemble de particules, tels un débitmètre avec roue à aubes.

Dans l'exemple illustré sur les figures 7 et 8, les moyens de mesure 12 d'une quantité de particules comprennent un bac de pesée 121 et un capteur de pesée 122 disposé sous le bac de pesée 121 et apte à peser les particules réceptionnées dans le bac de pesée 121. Ceci permet une mesure de quantité de particules précise.

Le bac de pesée 121 est dans l'exemple illustré de forme parallélépipédique. Il comprend une ouverture supérieure 123 apte à collecter des particules en provenance du réceptacle de collecte 110. Les particules tombent par gravité dans le bac de pesée 121. L'ouverture supérieure 123 s'étend sensiblement en-dessous de l'ouverture de sortie 117, l'écart entre ces deux ouvertures étant réduit de sorte à ce que le module de mesure soit compact en hauteur. L'ouverture supérieure 123 du bac de pesée 121 est plus importante que l'ouverture de sortie 117.

Ce module de mesure 1 qui est portatif peut être utilisé de façon autonome pour faire des mesures sur le terrain également. Dans ce cas d'utilisation, il n'y a pas de banc de test, on utilise le module de mesure 1 directement dans le champ.

L'ensemble constitué des moyens de collecte 11 et des moyens de pesée 12 est compact, du fait de l'agencement relatif de ces deux éléments qui sont distincts.

Les graines tombent par gravité depuis les moyens de collecte 11 dans le bac de pesée 121 à mesure que les graines sont déversées par une ou plusieurs sorties du semoir.

Le capteur de pesée 122 délivre un signal de mesure du poids qui est traité soit localement par une unité de traitement comprise dans le module de mesure ou à distance, par exemple dans un banc de test (l'unité de traitement peut être configurée pour obtenir un signal de débit massique par une dérivée dans le temps d'une mesure de poids issue d'un module de mesure).

La deuxième portion 113B de la paroi de fond 113 du réceptacle de collecte 110 forme dans cet exemple une rampe dirigée vers l'ouverture de sortie 117. L'angle d'inclinaison de cette rampe est inférieur à l'angle d'inclinaison des parois longitudinales 111, 112 et de la paroi latérale 114.

La paroi latérale 114 du réceptacle de collecte 110 est ici de forme incurvée, les parois longitudinales 111, 112 étant planes. Cette forme incurvée de la paroi latérale 114 permet d'orienter vers le bas le flux de particules sortant de l'élément semeur ES malgré l'angle d'éjection propre à chaque élément semeur. Elle permet d'absorber l'énergie cinétique des particules tombant sur cette paroi latérale 114 incurvée.

Dans une variante non illustrée, la paroi latérale 114 du réceptacle de collecte 110 est plane.

Le rayon de courbure de la paroi latérale 114 incurvée est compris entre 1 et 6m, de préférence entre 2 et 4m.

Le module de mesure est peu encombrant en largeur (moins de 20 cm) et longueur (moins de 50 cm) ce qui permet de mesurer la performance de machines agricoles de type semoirs avec des écartements serrés. Il présente en outre un poids raisonnable autour de 10kg. Ce module de mesure 1 est ainsi utilisable et déplaçable facilement pour effectuer un contrôle.

Dans un mode de réalisation particulier, au moins une partie de la paroi périphérique est fabriqué dans un matériau souple. Dans le mode de réalisation présenté sur les figures 7 et 8, la paroi latérale 114 incurvée est fabriquée dans un tel matériau souple.

A titre d'exemple, la paroi latérale 114 peut être constituée d'un filet ou d'une toile pliée qui permettent d'amortir les particules (paroi anti-rebond) provenant de l'élément semeur ES.

Lorsque la paroi latérale 114 est constituée d'un filet, l'air de transport éventuellement présent dans le flux de particules en provenance de l'élément semeur ES dans les moyens de collecte 11 peut être évacué entre les mailles du filet, de sorte à ne pas fausser la mesure de la quantité de graines qui est mise en œuvre par le biais des moyens de mesure 12 situés en aval des moyens de collecte 11. Les mailles du filet sont dimensionnées pour retenir les particules et évacuer aisément l'air de transport mélangé aux particules.

Cette paroi latérale 114 incurvée est de préférence une paroi avec une forte pente de sorte à ne pas freiner l'écoulement des particules vers le bas du réceptacle de collecte 110.

Plus généralement, au moins une partie de la paroi périphérique du réceptacle de collecte 110 peut être constituée d'au moins un élément souple plié présentant une surface ondulée.

Avantageusement, au moins une paroi périphérique du réceptacle de collecte 110 peut comprendre des micro-perforations de passage d'air.

Les micro-perforations peuvent être de forme sensiblement carrée, de longueur préférentiellement comprise entre 0,3 et 0,6 mm.

Le module de mesure 1 comprend des moyens de basculement 124 (un vérin dans cet exemple) du bac de pesée 121 des particules d'une position de réception des particules issues du réceptacle de collecte 110 vers une position de vida(n)ge du bac de pesée 121. A la fin de la pesée, il est ainsi aisé de vider le bac de pesée 121 et de faire une autre mesure si besoin. La mesure du poids est interrompue le temps de la vidange. Grâce au moyen de basculement de type vérin, le bac de pesée 121 peut être vidé à distance (sans intervention d'un opérateur) et selon une procédure pouvant être automatique.

Il est possible de placer plusieurs modules de mesure 1 côte à côte et les associer chacun à un ou plusieurs éléments semeurs d'un semoir, et de synchroniser les mesures du poids de plusieurs modules de mesure pour mesurer la répartition transversale en lignes ou rangs du semoir sur la largeur de travail et établir un diagnostic de la performance d'un semoir en sortie d'usine ou sur le terrain après plusieurs heures d'utilisation. La mesure des quantités issus des capteurs de mesure de chaque module peut être transmise vers un dispositif de traitement distinct des modules de mesure qui peut déterminer une quantité (poids par exemple) de graines sur chacun des rangs et comparer une quantité mesurée avec une quantité théorique de graines à semer pour un ou plusieurs rangs donnés du semoir. Ceci permet de contrôler le bon fonctionnement de chaque élément semeur du semoir et de détecter une éventuelle anomalie ou dysfonctionnement sur un ou plusieurs éléments semeurs du semoir. Cette anomalie peut être liée au fait que l'élément semeur est partiellement ou totalement obturé ce qui nécessite l'intervention d'un opérateur.

Le module de mesure est adapté pour mesurer des quantités de graines de taille et de forme différentes, par exemple des graines allongées telles que l'orge, l'avoine ou le blé, des petites graines allongées telles que le lin ou encore des petites graines rondes comme le colza.

D'autres variantes non illustrées du module de mesure des figures 7 à 9 sont décrites ci-après.

Le réceptacle de collecte et le bac de pesée du module de mesure peuvent être de toute autre forme.

Le réceptacle de collecte 110 peut prendre une forme générale tronconique, dont la section se réduit progressivement de l'ouverture d'entrée 116 des particules à l'ouverture de sortie 117 des particules.

Le réceptacle de collecte 110 peut présenter une portion supérieure de forme générale tronconique et une portion inférieure de forme générale cylindrique.

Les parois du réceptacle de collecte 110 sont configurées pour canaliser ou rassembler le flux de particules depuis l'ouverture d'entrée 116 vers l'ouverture de sortie 117 communiquant avec les moyens de mesure 12.

Les moyens de mesure peuvent se présenter sous la forme d'un bac de mesure prenant une forme générale tronconique.

Bien que l'on ait décrit le module de mesure des figures 7 à 9 pour un semoir, il est clair que la même approche peut s'appliquer à d'autres machines agricoles.

Le module de mesure des figures 7 à 9 est adapté en particulier mais non exclusivement pour mesurer la performance de semoirs pneumatiques et mécaniques.

Il est également adapté pour mesurer la performance des épandeurs d'engrais pneumatiques qui de façon connue comprennent une rampe équipée de plusieurs organes de sortie répartis le long de cette rampe et prenant la forme de conduits ou tuyaux de sortie pouvant être équipés de diffuseurs ou de palettes d'éclatement.

Il n'est toutefois pas adapté pour mesurer la performance des épandeurs centrifuges.

Il est à noter que le module de mesure des figures 1 à 6 peut comporter une ou plusieurs des caractéristiques des moyens de collecte 11 et des moyens de mesure 12 du module de mesure des figures 7 à 9.

Ainsi, le réceptacle de collecte du module de mesure des figures 1 à 6 peut présenter une forme générale d'entonnoir, dont la section se réduit progressivement de l'ouverture d'entrée des particules à l'ouverture de sortie des particules.

L'ouverture d'entrée du réceptacle de collecte du module de mesure des figures 1 à 6 peut être de section sensiblement rectangulaire.

Cette ouverture d'entrée peut être de section rectangulaire ou présenter une section ovale ou en forme d'ellipse très allongée avec un ratio de longueur sur largeur sensiblement égal à 8 :1.

La longueur de l'ouverture d'entrée est mesurée selon l'axe d'avancement de la machine agricole et la largeur de l'ouverture d'entrée est mesurée selon l'axe transversal à cet axe d'avancement.

Le réceptacle de collecte du module de mesure des figures 1 à 6 peut comprendre un espace intérieur défini par au moins une paroi périphérique comprenant une portion formant rampe dirigée vers l'ouverture de sortie.

Le réceptacle de collecte peut comprendre deux parois longitudinales opposées et reliées entre elles par une paroi latérale et une paroi de fond comprenant ladite portion formant rampe.

La paroi de fond peut comprendre plusieurs portions, dont une portion formant rampe.

L'angle d'inclinaison de ladite portion de la paroi de fond formant rampe peut être inférieur à l'angle d'inclinaison des parois longitudinales et de ladite paroi latérale.

Ladite paroi latérale peut être de forme incurvée.

Le rayon de courbure de ladite paroi latérale incurvée peut être compris entre 1 et 6m, de préférence entre 2 et 4m.

Au moins une partie de ladite au moins une paroi périphérique peut être fabriquée dans un matériau souple.

Ladite au moins une partie de ladite au moins une paroi périphérique peut être constituée d'au moins un élément souple à plis ondulés.

Ladite au moins une paroi périphérique du réceptacle de collecte peut comprendre des micro-perforations de passage d'air.

Les micro-perforations peuvent être de forme sensiblement carrée, de longueur préférentiellement comprise entre 0,3 et 0,6 mm.

Le module de mesure des figures 1 à 6 peut comprendre des moyens de basculement des moyens de mesure d'une position de réception d'une quantité de particules provenant des moyens de collecte vers une position de vida(n)ge desdits moyens de mesure.

## Revendications

1. Module de mesure (1) d'un flux de particules pour un banc de test mettant en œuvre au moins deux modules de mesure (1), ledit module de mesure (1) étant destiné à être positionné en regard d'au moins un organe de sortie (ES) d'une machine agricole de distribution de particules pour recevoir l'ensemble des particules délivrées par ledit au moins un organe de sortie (ES), ledit module de mesure (1) comprenant des moyens de collecte (11) de particules en provenance dudit au moins un organe de sortie (ES) de la machine agricole et des moyens de mesure (12) d'une quantité de particules en provenance des moyens de collecte (11), ledit module de mesure (1) comprenant en outre des moyens de transfert (13) des particules reliant les moyens de collecte (11) auxdits moyens de mesure (12), lesdits moyens de transfert (13) étant configurés pour réceptionner les particules s'écoulant de façon turbulente des moyens de collecte (11) et les délivrer selon un écoulement contrôlé et cadencé dans les moyens de mesure (12).

2. Module de mesure (1) selon la revendication 1, les moyens de transfert (13) prenant la forme d'une écluse (133) rotative comprenant une pluralité de pales (1331) définissant des cellules de transport des particules.

3. Module de mesure (1) selon la revendication 2, les pales (1331) de ladite écluse (133) étant en matériau souple.

4. Module de mesure (1) selon la revendication 3, les pales (1331) de ladite écluse (133) étant en polyuréthane de dureté comprise entre 50 et 90sh, préférentiellement entre 60 et 80sh et encore préférentiellement égal à 70 sh.

5. Module de mesure (1) selon l'une des revendications 2 à 4, comprenant des moyens de contrôle de la vitesse de rotation de l'écluse (133) rotative.

6. Module de mesure (1) selon l'une des revendications 2 à 5, l'écluse (133) rotative comprenant un rotor (1333) et au moins six cellules de transport (1332) des particules, les pales (1331) d'au moins deux cellules de transport (1332) étant en contact avec le stator de l'écluse (133) lors de la rotation cette dernière.

7. Module de mesure (1) selon l'une des revendications 2 à 6, le volume d'une cellule de transport (1332) étant de préférence compris entre 8 et 15 cm3, et encore préférentiellement égal à 11 cm3 environ.

8. Module de mesure (1) selon la revendication 1, les moyens de transfert (13) prenant la forme d'un élément creux (130) comprenant un espace interne de réception de particules, ledit espace interne comprenant à une extrémité une ouverture d'entrée (1321) des particules apte à collecter des particules en provenance des moyens de collecte (11) et à l'autre extrémité opposée une ouverture de sortie (1322) apte à délivrer les particules vers les moyens de mesure (12), l'élément creux (130) étant configuré pour passer d'une position d'obturation de l'ouverture de sortie (1322) dans laquelle les particules en provenance des moyens de collecte (11) sont réceptionnées au sein de l'espace interne et une position de libération de l'ouverture de sortie (1322) pour libérer les particules stockées dans l'espace interne vers les moyens de mesure (12).

9. Module de mesure (1) selon la revendication 8, les parois de l'élément creux étant en matériau souple et aptes à se déformer pour obturer ou libérer l'ouverture de sortie.

10. Module de mesure (1) selon l'une des revendications 1 à 9, dont lesdits moyens de collecte (11) comprennent un réceptacle de collecte (110) des particules comprenant une ouverture d'entrée (116) des particules présentant une première section apte à collecter des particules en provenance dudit au moins un organe de sortie (ES) de la machine agricole et une ouverture de sortie (117) présentant une deuxième section plus petite que la première section, la deuxième ouverture de sortie (117) étant apte à délivrer les particules vers les moyens de mesure (12) d'une quantité de particules, les parois du réceptacle de collecte (110) étant configurées pour rassembler les particules depuis l'ouverture d'entrée (116) vers l'ouverture de sortie (117).

11. Module de mesure (1) selon la revendication 10, comprenant au moins un capteur de passage de particules, tel un capteur à fourche optique, disposé au niveau de l'ouverture d'entrée (116) du réceptacle de collecte (110) des particules.

12. Module de mesure (1) selon la revendication 10 ou 11, le réceptacle de collecte (110) comprenant un espace intérieur défini par au moins une paroi périphérique comprenant une portion (113B) formant rampe dirigée vers l'ouverture de sortie (117).

13. Module de mesure (1) selon la revendication 12, au moins une partie de ladite au moins une paroi périphérique étant fabriquée dans un matériau souple.

14. Module de mesure (1) selon la revendication 12 ou 13, ladite au moins une paroi périphérique du réceptacle de collecte (110) comprenant des micro-perforations de passage d'air, les micro-perforations étant de forme sensiblement carrée, de longueur préférentiellement comprise entre 0,3 et 0,6 mm.
